# EUROPEAN PATENT SPECIFICATION

(11) **EP 3 084 670 B1**
(45) Date of publication and mention of the grant of the patent: **01.05.2019**
(21) Application number: 14803080.2
(22) Date of filing: 18.11.2014
(51) Int. Cl.: H04L 9/32, G06K 9/00, G06F 21/32

(54) **A BIOMETRIC DATA PRE-CHECK PROCESS TO OPTIMIZE PERSONALIZATION TIME**
BIOMETRISCHES VORPRÜFUNGSVERFAHREN ZUM PERSONALISIERUNGSZEIT OPTIMIERUNG
PROCESSUS DE PRÉ-VÉRIFICATION DE DONNÉES BIOMÉTRIQUES POUR OPTIMISER LE TEMPS DE PERSONNALISATION

(30) Priority: 20.12.2013 EP 13306818
(43) Date of publication of application: 26.10.2016
(73) Proprietor: Gemalto SA, 92190 Meudon (FR)
(72) Inventor: BOUTET, Olivier, F-92190 Meudon (FR); DUBOUCHER, Thomas, F-92190 Meudon (FR); VIBERT, Laurent, F-92190 Meudon (FR)
(74) Representative: Lotaut, Yacine Diaw
(86) International application number: PCT/EP2014/074890
(87) International publication number: WO 2015/090798

(56) References cited:
- EP-A2- 1 071 034
- "Machine Readable Travel Documents. Doc 9303 Part 3 Volume 2. Specifications for Electronically Enabled MRtds with Biometric Identification Capability.", , 1 January 2008 (2008-01-01), XP055116266, Retrieved from the Internet: URL:http://www.icao.int/publications/Docum ents/9303_p3_v2_cons_en.pdf [retrieved on 2014-05-05]
- UZ T ET AL: "Minutiae-based template synthesis and matching for fingerprint authentication", COMPUTER VISION AND IMAGE UNDERSTANDING, ACADEMIC PRESS, US, vol. 113, no. 9, 1 September 2009 (2009-09-01), pages 979-992, XP026320212, ISSN: 1077-3142, DOI: 10.1016/J.CVIU.2009.04.002 [retrieved on 2009-05-18]
- TAI PANG CHEN ET AL: "ISO/IEC standards for on-card biometric comparison", INTERNATIONAL JOURNAL OF BIOMETRICS, vol. 5, no. 1, 1 January 2013 (2013-01-01) , pages 30-52, XP055116730, ISSN: 1755-8301, DOI: 10.1504/IJBM.2013.050732
- YI CHEN ET AL: "Fingerprint Quality Indices for Predicting Authentication Performance", 28 June 2005 (2005-06-28), AUDIO- AND VIDEO-BASED BIOMETRIC PERSON AUTHENTICATION; [LECTURE NOTES IN COMPUTER SCIENCE;;LNCS], SPRINGER-VERLAG, BERLIN/HEIDELBERG, PAGE(S) 160 - 170, XP019013268, ISBN: 978-3-540-27887-0 page 161, line 29 - page 165, line 4 page 167, line 1 - page 167, line 26

## Description

### TECHNICAL FIELD

The present invention relates to biometrics and to realization processes of biometric documents. The invention relates in particular to a biometric data process to speed-up personalization time and limit personalization defect.

### BACKGROUND OF THE INVENTION

Biometrics refers to the identification of human beings based on their unique biological characteristics, and has established itself as the most pertinent technology for identifying individuals in a fast and reliable way. Examples of biological characteristics include among others: fingerprints, face, iris, retina and hand geometry. An application of biometrics that has been widely deployed to date is the electronic passport. Authentication methods based on biometrics typically require a user to submit his biological characteristics to a biometric system. As a result, the individual is either accepted as a valid user, or rejected. Realization of such biometric documents typically involves the following steps:
- acquisition of initial biometric data from a human user, using a sensor, for example an image acquisition system;
- extraction of biological characteristics from the initially acquired biometric data. The result of this extraction can be a vector of numbers, or an image with particular properties;
- generation of a template, which is a synthesis of the relevant characteristics extracted from the initially acquired biometric data;
- enrolment of the template: the template is stored, for example in a computer file;
- personalization of a biometric document: during this step, the biometric document is fabricated and the template is stored on it, for example on a chip of the biometric document. The template is stored in a raw, unprocessed format;
- initialization of the biometric document, said initialization comprising a transformation of the template, from the unprocessed format to a processed format, resulting in a transformed template. This step occurs on the biometric document and typically requires several hundreds of milliseconds.

According to this realization process, the biometric document is then delivered to the human user. A disadvantage of this first realization process is its relative slowness, due to the time-consuming step of initialization. An alternative realization process therefore proposes to directly deliver the biometric document to the human user after the personalization step, the initialization step being performed later, during the first use of the biometric document by the human user. An acceleration of the realization process is thus allowed.

However, there is a risk with both methods - the "slow" one and the "quick" one - that the generated template is finally rejected during the initialization step, for example because it comprises an incorrect quantity of characteristics, or because said characteristics present inadequate geometric properties. In the case of a fingerprint, the extracted characteristics are typically minutiae, that is to say, elements which differentiate one fingerprint from another and which impart individuality to each fingerprint. If the template is rejected:
- with the "slow" method, time has been lost proceeding an unsuccessful initialization step, and one has to come back to the user either to make a new capture or to find an alternative authentication method;
- with the "quick" method, a defective biometric document has been delivered to the human user.

None of these cases are acceptable for mass production. The standard document: "Machine Readable Travel Documents. Doc 9303 Part 3 Volume 2. Specifications for Electronically Enabled MRtds with Biometric Identification Capability.", 1 January 2008 (2008-01-01), discloses the usage, in a biometric document, of fingerprint images as well as optionally, fingerprint templates (conditional biometrics). It indicates that these data are be signed and that conditional biometrics should be encrypted. It also discloses the special care has to be taken with biometrics quality, in particular at the acquisition time, where the images have to meet quality thresholds.

### SUMMARY OF THE INVENTION

The present invention addresses concerns of the prior art. An objective of the invention is therefore to provide an efficient and quick realization process of biometric document that eliminates the risk of delivering a defective biometric document to a human user.

To this end, in an embodiment of the present invention, there is provided a method for the realization of a biometric document, said method comprising the steps listed in the attached independent claim 1.

Thanks to the invention, the template is processed with a first part of the biometric algorithm that will be used in the future biometric document. If the template is incompatible with said biometric algorithm, the template is rejected. It should be noted that the eventual rejection of the template occurs before proceeding to an initialization step of the template. In this way, the case of an incompatible template rejected only after an unsuccessful initialization step is eliminated. The verified template generated after processing the template with the first part of the biometric algorithm is indeed guaranteed to be accepted by the biometric algorithm in future steps, and in particular in an initialization step. The biometric algorithm comprises beneficially a first function that allows testing the compatibility of the generated template of the initial biometric data with said biometric algorithm, and a second function that allows authenticating a human user owing the biometric document. Said first function is realized by said first part of said biometric algorithm.

The method according to an embodiment of the invention may also have one or more of the characteristics below, considered individually, or in all technically possible combinations:
- Processing the template with the first part of the biometric algorithm may be realized using a secure element that contains said biometric algorithm.
- The method may comprise a step of signing the generated verified template.
- The method may comprise a step of encrypting the generated verified template.
- The method may comprise both a step of signing and a step of encrypting the generated verified template.
- Said initial biometric data may comprise fingerprints; said template of the initial biometric data may comprise a spatial map of a set of minutiae of the fingerprints and said first part of the biometric algorithm may check geometric characteristics of the set of minutiae of the fingerprints.
- Geometric characteristics of the set of minutiae of the fingerprints that are checked by the first part of the biometric algorithm may be chosen among the following list:
   ∘ inter-minutiae distances;
   ∘ angles between remarkable lines of the set of minutiae;
   ∘ a spatial distribution of the set of minutiae.
- The method may comprise, before determining if the template is compatible with the biometric algorithm, a step of checking quantitative characteristics of the template.
- Quantitative characteristics of the template may be chosen among the following list:
   ∘ minimum quantity of minutiae of the set of minutiae of the fingerprints;
   ∘ maximum quantity of minutiae of the set of minutiae of the fingerprints.
- According to a first embodiment, the method may comprise the following steps:
   ∘ enrolling the verified template;
   ∘ personalizing the biometric document by storing the verified template, that has been previously enrolled, on a chip of the biometric document;
   ∘ delivering the personalized biometric document to the human user;
   ∘ initializing the biometric document by transforming the verified template from an unprocessed format to a processed format.
- According to a second embodiment, the method may comprise the following steps:
   ∘ enrolling the verified template;
   ∘ personalizing the biometric document by storing the verified template, that has been previously enrolled, on a chip of the biometric document;
   ∘ initializing the biometric document by transforming the verified template from an unprocessed format to a processed format;
   ∘ delivering the personalized and initialized biometric document to the human user.
- Said biometric algorithm of the biometric document beneficially ensures, for the authentication of the human user, a comparison between:
   ∘ second biometric data of the human user, second biometric data being acquired after said initial biometric data;
   ∘ and said verified template of the initial biometric data.

Other features and benefits of the invention will become apparent on examining the detailed specifications hereafter and the appended drawings.

### BRIEF DESCRIPTION OF THE FIGURES

- Figure 1 schematically illustrates a diagram of the steps of a method according to a first embodiment of the invention.
- Figure 2a schematically illustrates a first realization of the method according to the first embodiment of figure 1.
- Figure 2b schematically illustrates a second realization of the method according to the first embodiment of figure 1.

### DETAILED DESCRIPTION OF THE PREFERRED EMBODIMENT

Some embodiments of apparatus and methods in accordance with embodiments of the present invention are now described, by way of example only, and with reference to the accompanying drawings. The description is to be regarded as illustrative in nature and not as restricted.

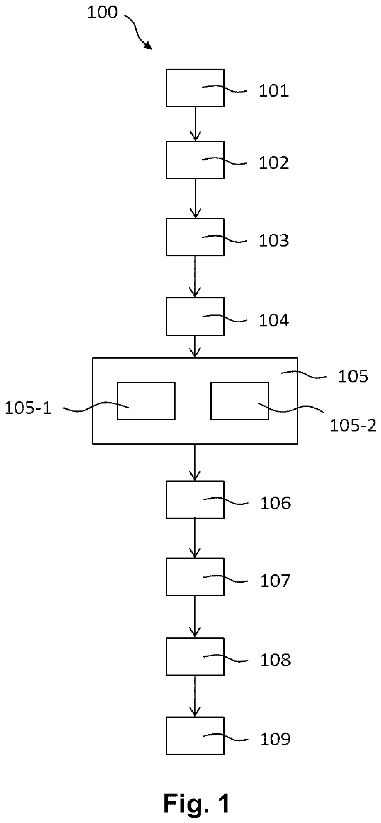

Figure 1 schematically illustrates a diagram of the steps of a method 100 for the realization of a biometric document, according to a first embodiment of the invention.

According to a first step 101, initial biometric data are acquired from a human user.

According to a second step 102, a template of the initial biometric data is generated.

According to a facultative third step 103, quantitative characteristics of the generated template are tested. The facultative third step 103, irrespective of the biometric algorithm, can improve the compatibility ratio of the template with the biometric algorithm. However, there is no guarantee that a template, the characteristics of which have been quantitatively tested during the third step 103, is compatible with the biometric algorithm. Quantitative characteristics of the template that can be tested during the third step 103 are for example:
- a minimum quantity of characteristics of the initial biometric data previously acquired;
- a maximum quantity of characteristics of the initial biometric data previously acquired.

If the quantity of characteristics is lower than the minimum, a new acquisition of the initial biometric data can be required. If the quantity of characteristics is upper than the maximum, a filtering of the characteristics can be carried out in order to finally obtain a quantity of characteristics comprised between the minimum and the maximum.

According to a fourth step 104, one determines if the template is compatible with a biometric algorithm that will be used in a future biometric document, by processing the template with a first part of said biometric algorithm, said first part of the biometric algorithm either generating a verified template if the template is compatible, or rejecting the template if the template is incompatible. The method 100 according to the first embodiment of the invention then comprises a fifth step 105, having a first sub-step 105-1 of signing the verified template and/or a second sub-step 105-2 of encrypting the verified template. The first sub-step 105-1 of signature and the second sub-step 105-2 of encryption of the fifth step 105 are independent: one can implement either or both sub-steps 105-1 and 105-2. If both sub-steps of signature 105-1 and encryption 105-2 are implemented, it is to be noted that one can proceed first to the sub-step of signature 105-1 and then to the sub-step of encryption 105-2, or first to the sub-step of encryption 105-2 and then to the sub-step of signature 105-1.

According to a sixth step 106, the verified template is enrolled. Steps 101 to 106 that have just been described can typically be realized in a city hall.

According to a seventh step 107, the biometric document is personalized by storing the verified template on a chip of the biometric document. The seventh step can typically be realized by a national printer.

According to an eighth step 108, the personalized biometric document is delivered to the human user.

According to a ninth step 109, the biometric document is initialized by transforming the verified template from an unprocessed format to a processed format.

The first embodiment of the invention can be referred to as a "quick method" for the realization of a biometric document, because initialization of the biometric document and transformation of the verified template take place once the biometric document has been delivered to its human user, at the very first use of the biometric document by its human user, for example during an identity control in an airport. Said initialization of the biometric document and transformation of the verified template are indeed typically very time-consuming - several hundreds of milliseconds - as compared with the other steps of the process, from an industrial point of view. However, duration of several hundreds of milliseconds, furthermore only occurring at the first use, is unnoticeable from a user point of view.

According to a second embodiment of the invention, the ninth step 109 of initialization of the biometric document and transformation of the verified template can take place right after the seventh step 107 of personalization of the biometric document, and just before the eighth step 108 of delivery of the biometric document. The second embodiment of the invention can thus be referred to as a "slow method", as compared to the "quick method" of the first embodiment.

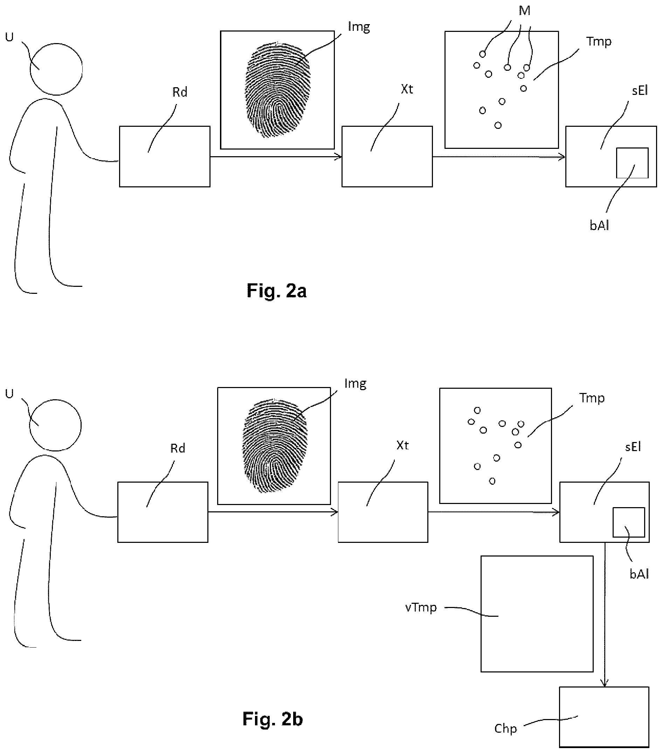

A first operating mode of the method 100 is illustrated in figure 2a. The first operating mode corresponds to the case of an incompatible template, which is rejected during the fourth step 104.

Figure 2a shows a human user U, using a sensor Rd to proceed to the acquisition of initial biometric data, corresponding to the first step 101 of the method 100. In the particular example shown in figure 2a, initial biometric data are fingerprints of the human user U. However, other biometric data, such as face, iris, retina, hand or vein pattern, could also be used. The sensor Rd can for example be an image acquisition system. The sensor Rd generates an image Img of the acquired fingerprint. The image Img is then transmitted to an extractor Xt, which extracts the characteristics of the acquired fingerprint. Said characteristics typically are minutiae, that is to say elements which differentiate one fingerprint from another and which impart individuality to each fingerprint. Minutiae comprise for example ridge ending, ridge bifurcation, short or independent ridge, etc. The extractor Xt then generates a template Tmp of the acquired fingerprint, which corresponds to the second step 102 of the method 100. The template Tmp comprises a set of minutiae M. The template Tmp is then transmitted to a secure element sEI, which comprises a biometric algorithm bAI. Said biometric algorithm bAl used at this early stage of the method 100 is precisely the biometric algorithm that will be used in the future biometric document, for authentication and/or identification of the human user U. The template Tmp is processed with a first part of said biometric algorithm bAI, which corresponds to the fourth step 104 of the method 100. Processing the template Tmp with said first part of the biometric algorithm bAl allows to determine if the template Tmp is compatible with said biometric algorithm bAI. In the first operating mode of the method 100, the template Tmp is incompatible with the biometric algorithm, which leads to the rejection of the template Tmp. A typical example where the template Tmp is rejected by the biometric algorithm bAl considered in this particular embodiment of the invention, is the case of aligned minutiae M. It should be noted that even if the third step 103 is implemented, and if quantitative characteristics of the set of minutiae M are successfully tested, the template Tmp will be rejected in said particular case of aligned minutiae M. Compared to the facultative third step 103, where quantitative characteristics of the template Tmp can be tested, the fourth step 104 typically checks geometric characteristics of the template Tmp. Said geometric characteristics can for example be chosen among the following list:
- inter-minutiae distances;
- angles between remarkable lines of the set of minutiae;
- spatial distribution of the set of minutiae.

A second operating mode of the method 100 is illustrated in figure 2b. The second operating mode corresponds to the case of a compatible template. As previously described in relation to figure 2a, the human user U proceeds to the acquisition of initial biometric data - here, a fingerprint - using the sensor Rd. The sensor Rd generates an image Img of the acquired fingerprint. The image Img is transmitted to the extractor Xt, which extracts the characteristics of the acquired fingerprint and generates a template Tmp of the acquired fingerprint. The template Tmp is then transmitted to a secure element sEI, which contains the biometric algorithm bAl that will be used in the future biometric document. The template Tmp is processed with a first part of said biometric algorithm bAI, which corresponds to the fourth step 104 of the method 100. In the second operating mode of the method 100, the template Tmp is compatible with the biometric algorithm bAl and the processing of the template Tmp with the first part of the biometric algorithm bAl results in the generation of a verified template vTmp. The verified template vTmp is guaranteed to be accepted by the biometric algorithm bAl for any future operation, and in particular during a transformation step. The verified template vTmp is then stored on a chip Chp of a biometric document, during a personalization step that has previously been mentioned in relation. The fourth step 104 typically checks geometric characteristics of the template Tmp. Said geometric characteristics can for example be chosen among the following list: inter-minutiae distances; angles between remarkable lines of the set of minutiae; spatial distribution of the set of minutiae.

## Claims

1. Method (100) for the realization of a biometric document, said method comprising the following steps:
- acquiring initial biometric data from a human user (U), said initial biometric data being intended to be used by a biometric algorithm (bAl) of said biometric document;
- generating a template (Tmp) of the initial biometric data;
- testing (103) quantitative characteristics of the generated template;
- determining if the template (Tmp) is compatible with said biometric algorithm (bAl) by processing the template (Tmp) with a first part of said biometric algorithm (bAl), said first part of the biometric algorithm either generating a verified template (vTmp) if the template is compatible, or rejecting the template if the template is incompatible, said first part of the biometric algorithm performing at least one check of geometric characteristics of a set of minutiae of the template among:
∘ inter-minutiae distances;
∘ angles between remarkable lines of the set of minutiae;
∘ a spatial distribution of the set of minutiae;
- enrolling the verified template (vTmp) in a computer file;
- personalizing the biometric document by storing the verified template (vTmp), that has been previously enrolled, on a chip (Chp) of the biometric document;
- initializing the biometric document by transforming the verified template (vTmp).

2. Method (100) according to claim 1 wherein processing the template (Tmp) with the first part of the biometric algorithm (bAl) is realized using a secure element (sEI) that contains said biometric algorithm.

3. Method (100) according to claim 1 comprising a step (105-1) of signing the generated verified template (vTmp).

4. Method (100) according to claim 1 comprising a step (105-2) of encrypting the generated verified template (vTmp).

5. Method (100) according to claim 1 wherein:
- said initial biometric data comprise fingerprints;
- said template (Tmp) of the initial biometric data comprises a spatial map of a set of minutiae (M) of the fingerprints;
- said first part of the biometric algorithm (bAl) checks geometric characteristics of the set of minutiae (M) of the fingerprints.

6. Method (100) according to claim 1 comprising the following step:
delivering the personalized biometric document to the human user (U) prior to its initialization.

7. Method (100) according to claim 1 comprising the following step:
- delivering the personalized and initialized biometric document to the human user (U) after its initialization.

8. Method (100) according to claim 1 wherein said biometric algorithm of the biometric document ensures, for the authentication of the human user, a comparison between:
- second biometric data of the human user, second biometric data being acquired after said initial biometric data;
- and said verified template (vTmp) of the initial biometric data.

## Patentansprüche

1. Verfahren (100) zum Erstellen eines biometrischen Dokuments, wobei das Verfahren die folgenden Schritte umfasst:
- Erhalten anfänglicher biometrischer Daten von einem menschlichen Benutzer (U), wobei die anfänglichen biometrischen Daten dazu bestimmt sind, von einem biometrischen Algorithmus (bAl) des biometrischen Dokuments verwendet zu werden;
- Erzeugen einer Vorlage (Tmp) der ursprünglichen biometrischen Daten;
- Prüfen (103) der quantitativen Eigenschaften der erzeugten Vorlage;
- Bestimmen, ob die Vorlage (Tmp) mit dem biometrischen Algorithmus (bAl) kompatibel ist, durch Verarbeiten der Vorlage (Tmp) mit einem ersten Teil des biometrischen Algorithmus (bAl), wobei der erste Teil des biometrischen Algorithmus entweder eine bestätigte Vorlage (vTmp) erzeugt, falls die Vorlage kompatibel ist, oder die Vorlage ablehnt, falls die Vorlage nicht kompatibel ist, wobei der erste Teil des biometrischen Algorithmus wenigstens eine Untersuchung geometrischer Eigenschaften eines Satzes von Minutien der Vorlage bei den Folgenden durchführt:
∘ Abständen zwischen den Minutien;
∘ Winkeln zwischen bemerkenswerten Linien des Satzes von Minutien;
∘ einer räumlichen Verteilung des Satzes von Minutien;
- Registrieren der bestätigten Vorlage (vTmp) in einer Computerdatei;
- Personalisieren des biometrischen Dokuments durch Speichern der bestätigten Vorlage (vTmp), die vorher registriert wurde, auf einem Chip (Chp) des biometrischen Dokuments;
- Initialisieren des biometrischen Dokuments durch Transformieren der bestätigten Vorlage (vTmp).

2. Verfahren (100) nach Anspruch 1, wobei das Verarbeiten der Vorlage (Tmp) mit dem ersten Teil des biometrischen Algorithmus (bAI) unter Verwendung eines sicheren Elements (sEI) realisiert wird, das den biometrischen Algorithmus enthält.

3. Verfahren (100) nach Anspruch 1, das einen Schritt (105-1) des Signierens der erzeugten bestätigten Vorlage (vTmp) umfasst.

4. Verfahren (100) nach Anspruch 1, das einen Schritt (105-2) des Verschlüsselns der erzeugten bestätigten Vorlage (vTmp) umfasst.

5. Verfahren (100) nach Anspruch 1, wobei:
- die anfänglichen biometrischen Daten Fingerabdrücke umfassen;
- die Vorlage (Tmp) der anfänglichen biometrischen Daten eine räumliche Karte eines Satzes von Minutien (M) der Fingerabdrücke umfasst;
- der erste Teil des biometrischen Algorithmus (bAl) die geometrischen Eigenschaften des Satzes von Minutien (M) der Fingerabdrücke untersucht.

6. Verfahren (100) nach Anspruch 1, das den folgenden Schritt umfasst: Liefern des personalisierten biometrischen Dokuments an den menschlichen Benutzer (U) vor dem Initialisieren davon.

7. Verfahren (100) nach Anspruch 1, das den folgenden Schritt umfasst:
- Liefern des personalisierten und initialisierten biometrischen Dokuments an den menschlichen Benutzer (U) nach seinem Initialisieren.

8. Verfahren (100) nach Anspruch 1, wobei der biometrische Algorithmus des biometrischen Dokuments zum Authentifizieren des menschlichen Benutzers, ein Vergleichen der Folgenden gewährleistet:
- zweiter biometrischer Daten des menschlichen Benutzers, wobei zweite biometrische Daten nach den anfänglichen biometrischen Daten erhalten werden;
- und der bestätigten Vorlage (vTmp) der anfänglichen biometrischen Daten.

## Revendications

1. Procédé (100) pour la réalisation d'un document biométrique, ledit procédé comprenant les étapes consistant à :
- acquérir de premières données biométriques d'un utilisateur humain (U), lesdites premières données biométriques étant destinées à être utilisées par un algorithme biométrique (bAl) dudit document biométrique ;
- générer un modèle (Tmp) des premières données biométriques ;
- tester (103) des caractéristiques quantitatives du modèle généré ;
- déterminer si le modèle (Tmp) est compatible avec ledit algorithme biométrique (bAl) en traitant le modèle (Tmp) avec une première partie dudit algorithme biométrique (bAl), ladite première partie de l'algorithme biométrique soit générant un modèle vérifié (vTmp) si le modèle est compatible, soit rejetant le modèle si le modèle est incompatible, ladite première partie de l'algorithme biométrique effectuant au moins une vérification des caractéristiques géométriques d'un ensemble de minuties du modèle parmi :
∘ des distances entre minuties ;
∘ des angles entre les lignes remarquables de l'ensemble des minuties ;
∘ une distribution spatiale de l'ensemble des minuties ;
- inscrire le modèle vérifié (vTmp) dans un fichier informatique ;
- personnaliser le document biométrique en stockant le modèle vérifié (vTmp) précédemment inscrit sur une puce (Chp) du document biométrique ;
- initialiser le document biométrique en transformant le modèle vérifié (vTmp).

2. Procédé (100) selon la revendication 1, dans lequel le traitement du modèle (Tmp) avec la première partie de l'algorithme biométrique (bAl) est réalisé à l'aide d'un élément sécurisé (sEl) contenant ledit algorithme biométrique.

3. Procédé (100) selon la revendication 1, comprenant une étape (105-1) de signature du modèle vérifié (vTmp) généré.

4. Procédé (100) selon la revendication 1, comprenant une étape (105-2) de chiffrement du modèle vérifié (vTmp) généré.

5. Procédé (100) selon la revendication 1, dans lequel :
- lesdites premières données biométriques comprennent des empreintes digitales ;
- ledit modèle (Tmp) des premières données biométriques comprend une carte spatiale d'un ensemble de minuties (M) des empreintes digitales ;
- ladite première partie de l'algorithme biométrique (bAl) vérifie les caractéristiques géométriques de l'ensemble des minuties (M) des empreintes digitales.

6. Procédé (100) selon la revendication 1, comprenant l'étape consistant à transmettre le document biométrique personnalisé à l'utilisateur humain (U) avant son initialisation.

7. Procédé (100) selon la revendication 1, comprenant l'étape consistant à :
- transmettre le document biométrique personnalisé et initialisé à l'utilisateur humain (U) après son initialisation.

8. Procédé (100) selon la revendication 1, dans lequel ledit algorithme biométrique du document biométrique assure, pour l'authentification de l'utilisateur humain, une comparaison entre :
- des secondes données biométriques de l'utilisateur humain, lesdites secondes données biométriques étant acquises après lesdites premières données biométriques ; et
- ledit modèle vérifié (vTmp) des premières données biométriques.
